Europäisches Patentamt

European Patent Office

Office européen des brevets

(19)

(11) Veröffentlichungsnummer : **0 198 931**
**B1**

(12) **EUROPÄISCHE PATENTSCHRIFT**

(45) Veröffentlichungstag der Patentschrift :
07.09.88

(21) Anmeldenummer : 85104759.7

(22) Anmeldetag : 19.04.85

(51) Int. Cl.⁴ : **B 01 D   5/00**, B 01 D   9/00,
D 01 F 13/02

(54) Verfahren zur merhrstufigen Mischkondensation von Dämpfen und dessen Verwendung.

(43) Veröffentlichungstag der Anmeldung :
29.10.86 Patentblatt 86/44

(45) Bekanntmachung des Hinweises auf die Patenterteilung : 07.09.88 Patentblatt 88/36

(84) Benannte Vertragsstaaten :
AT CH DE FR GB IT LI

(56) Entgegenhaltungen :
EP-A- 0 127 722
DE-C- 3 310 960

(73) Patentinhaber : Ebner & Co. KG Anlagen und Apparate
Industriestrasse 8
D-6419 Eiterfeld (DE)

(72) Erfinder : Ebner, Karl
Theodor-Heuss-Strasse 3
D-6370 Oberusel/Ts (DE)
Erfinder : Ebner, Stefan, Dipl.-Ing.
Theodor-Heuss-Strasse 3
D-6370 Oberusel/Ts (DE)

(74) Vertreter : Jaeger, Klaus, Dipl.-Chem. Dr.
Jaeger, Steffens & Köster Patentanwälte Pippinplatz
4a
D-8035 München-Gauting (DE)

## Beschreibung

Die Erfindung betrifft ein Verfahren zum mehrstufigen Mischkondensieren von Dämpfen mit Kühllösungen der im Oberbegriff des Anspruchs 1 genannten Art sowie eine Verwendung dieses Verfahrens.

Das vorstehend genannte Verfahren ist aus der EP-A-O 127 722 bekannt. Dieses Verfahren zeichnet sich vor allem durch einen bemerkenswert geringen Verbrauch an Kühllösung aus. Verbesserungswürdig an dem bekannten Verfahren ist jedoch der nach wie vor noch recht hohe Energieverbrauch. Dies liegt insbesondere daran, daß bei den verwendeten Kühllösungen die verfügbaren Siedepunkterhöhungen aufgrund der relativ hohen Erstarrungspunkte der konzentrierten Kühllösungen nicht ausreichend ausgenutzt werden können. Vor allem trifft dies bei der Verwendung von Natronlauge als Kühllösung zu. So hat handelsübliche wässrige Natronlauge beispielsweise eine Konzentration von 50 Gew.-% NaOH. Da der Erstarrungspunkt einer 50 %igen wässrigen Natronlauge jedoch bei 16° C liegt, können mit einer solchen handelsüblichen konzentrierten 50 %igen wässrigen Natronlauge keine Dämpfe mischkondensiert werden, die kälter als ca. 16° C sind. Bei der speziell problematischen Mischkondensation von Vakuumdämpfen müssen solche Dämpfe jedoch auch bei Temperaturen unterhalb von 0° C, nicht selten bei Temperaturen von - 4° C, wie dies beispielsweise in der eingangs genannten Druckschrift dargestellt ist, kondensiert werden. Wenn für die Mischkondensation solcher kalten Vakuumdämpfe wässrige Natronlauge eingesetzt werden soll, muß diese auf eine Konzentration von kleiner als 25 Gew.-% NaOH verdünnt werden.

Andererseits weist die 50 %ige wässrige Natronlauge unter Atmosphärendruck eine Siedepunktserhöhung von ca. 54° C auf. Diese Siedepunktserhöhung kann bei dem bekannten Verfahren nicht in vollem Umfang zur Mischkondensation ausgenutzt werden. Die Größe der dadurch bei dem eingangs genannten bekannten Verfahren hinzunehmenden Verluste durch nicht ausnutzbare an sich vorhandene und verfügbare Möglichkeiten wird weiterhin dadurch verdeutlicht, wenn man sich vor Augen hält, daß bereits eine wässrige Natronlauge mit einer Konzentration von immerhin noch 40 Gew.-% NaOH nur noch eine Siedepunkterhöhung von ca. 36° C aufweist, dabei aber noch immer einen Erstarrungspunkt von ca. 15° C hat.

Ausgehend von diesem Stand der Technik liegt der Erfindung die Aufgabe zugrunde, das eingangs genannte Verfahren dahingehend zu verbessern, daß durch eine bessere Ausnutzung der verfügbaren Siedepunktserhöhung der jeweils eingesetzten konzentrierten Kühllösung der Gesamtprozeß der mehrstufigen Mischkondensation von Dämpfen, insbesondere kalter Dämpfe mit einem geringeren Energieverbrauch durchgeführt werden kann.

Zur Lösung dieser Aufgabe schafft die Erfindung ein Verfahren der eingangs genannten Art, das die im kennzeichnenden Teil des Anspruchs 1 genannten Merkmale aufweist.

Ausgestaltungen der Erfindung sind Gegenstand der Unteransprüche.

Das Verfahren gemäß der Erfindung eignet sich speziell für all jene zahlreichen Mischkondensationen, bei denen wässrige Natronlauge als Kühllösung verwendet wird. Insbesondere kann das Verfahren gemäß der Erfindung mit großem Vorteil im Rahmen der Regenerierung von Spinnbadlösungen aus Viskosespinnanlagen eingesetzt werden. Bei diesen Regenerationsverfahren werden die Spinnbadlösungen in mehreren in Reihe geschalteten Vakuumkristallisatoren eingedampft, wobei die kalten Brüden vorteilhaft der Mischkondensation nach den Verfahren gemäß der Erfindung unterzogen werden.

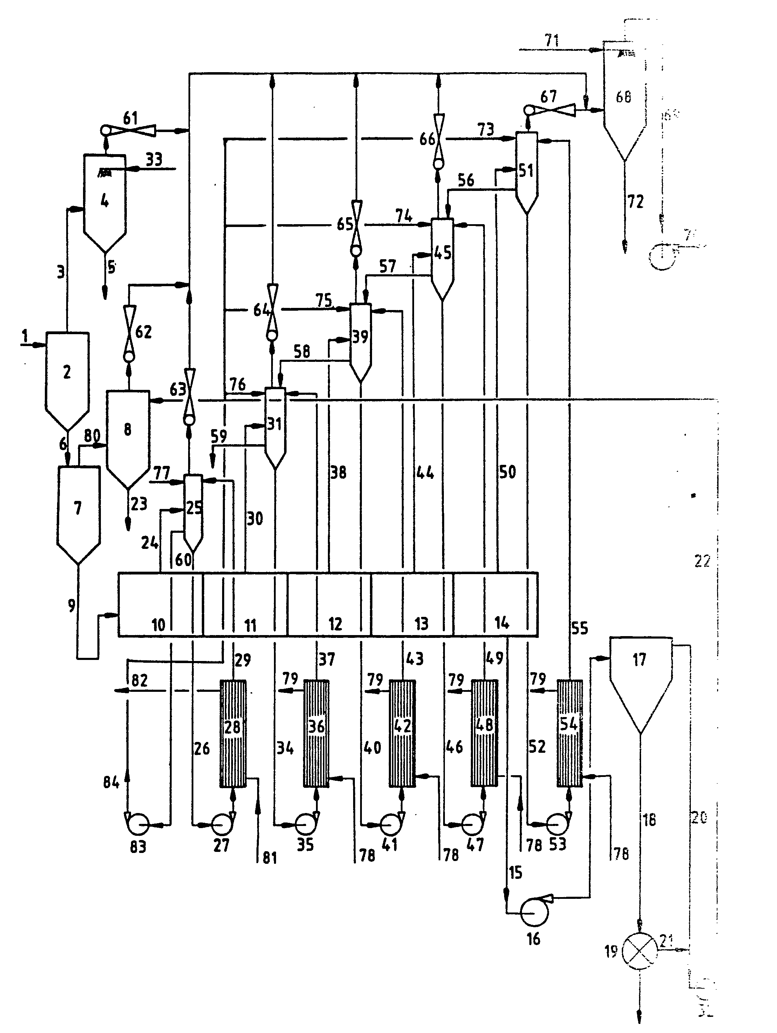

Die Erfindung ist im folgenden anhand eines Ausführungsbeispiels in Verbindung mit der einzigen Figur näher erläutert.

Die beigefügte einzige

Figur zeigt in vereinfachter schematischer Darstellung das Blockschaltbild einer Anlage zur Durchführung des Verfahrens gemäß der Erfindung.

Die in der Zeichnung dargestellte Anlage dient dem Regenerieren einer Viskosespinnbadlösung unter Verwendung von Vakuumkristallisatoren und Mischkondensation der Kristallisatorbrüden mit Natronlauge.

Die zu regenerierende und abzukühlende Spinnbadlösung wird über eine Zulaufleitung 1 einem Vorkühler 2 zugeführt und dort bis auf 30° C abgekühlt.

Der bei dieser Abkühlung entstehende Brüden wird über eine Rohrleitung 3 einem Wassermischkondensator 4 zugeführt und dort mit dem Kühlwasser kondensiert, das über eine Zulaufleitung 33 in den Mischkondensator 4 eintritt und diesen über eine Abzugsleitung 5 verlässt.

Die im ersten Vorkühler 2 vorgekühlte Spinnbadlösung wird dann über eine Rohrleitung 6 in einen nachgeschalteten zweiten Vorkühler 7 überführt. Der im zweiten Vorkühler 7 entstehende Brüden wird über eine Rohrleitung 80 einem Laugenmischkondensator 8 zugeführt und dort mit der regenerierten, also vom Salz befreiten abgekühlten Mutterlauge der Spinnbadlösung, kondensiert.

Das nunmehr auf 20° C vorgekühlte Spinnbad wird dann auf dem zweiten Vorkühler 7 über eine Rohrleitung 9 in eine erste von fünf aufeinanderfolgenden Vakuumkristallisatorstufen 10, 11, 12, 13 und 14 überführt. In diesen fünf Kristallisatorstufen findet eine stufenweise Abkühlung der Spinnbadlösung bis auf 0° C statt. Das auf 0° C abgekühlte Spinnbad wird dann über eine Rohrleitung 15 und eine Pumpe 16 in einen Eindicker 17 überführt. Das Konzentrat der Spinnbadlösung wird dann über eine Abzugsleitung 18 aus dem Eindicker 17 in eine Zentrifuge 19 geleitet. Die über dem Eindicker 17 ablaufende klare Mutterlauge wird über eine Leitung 20 mit der über eine Rohrleitung 21 aus der Zentrifuge 19 zugeführten Schleuderlauge vereinigt und über eine Förderpumpe 32 und eine Druckleitung 22 als Kondensationsmittel in den Mischkondensator 8 überführt.

Der in der ersten Kristallisatorkühlstufe 10 entstehende Brüden wird über eine Rohrleitung 24 einem ersten, im Rahmen der anschließenden mehrstufigen Mischkondensation als Vorstufe dienenden Mischkondensator 25 zugeführt. Über die Leitung 26 wird unter Zwischenschaltung einer Pumpe 27 und eines Rückkühlers 28, der mit Kühlwasser beaufschlagt ist, sowie eine Rücklaufleitung 29 ein Mischkondensatorkreislauf der Vorstufe für die Kühllösung hergestellt. Diesem Mischkondensator 25 der Vorstufe wird über eine Zulaufleitung 77 eine unmittelbar aus dem Handel bezogene unverdünnte 50 %ige wässrige Natronlauge in der für den Gesamtprozeß aller Mischkondensatorstufen erforderlichen Menge zugeführt. Dieser Zulauf wird dabei so dosiert, daß im Mischkondensatorkreislauf 25, 26, 27, 28, 29 der Vorstufe eine Konzentration der als Kühllösung dienenden wässrigen Natronlauge von 25 bis zu 35 Gew.-% NaOH, vorzugsweise um 30 Gew.-% NaOH, eingestellt und aufrechterhalten wird. Auf diese Weise ist eine kontinuierliche Kondensation des in der ersten Vakuumkristallisatorstufe 10 entstehenden Brüden gewährleistet.

In gleicher Weise weist die zweite Kühlstufe 11 eine Brüdenabzugsleitung 30, einen Mischkondensator 31, eine Ablaufleitung 34, eine Pumpe 35, einen Rückkühler 36 — der jedoch mit einem Kältemittel beaufschlagt wird — und eine Rückführungsleitung 37 zum Mischkondensator 31 auf.

Der in der dritten Kristallisatorstufe 12 entstehende Brüden gelangt über eine Leitung 38 in den Mischkondensator 39, dessen Kondensat über eine Ablaufleitung 40, eine Pumpe 41, einen Rückkühler 42 und eine Rücklaufleitung 43 mit der Kühllösung bzw. Kühllauge im Kreislauf geführt wird.

Der Brüden aus der vierten Kristallisatorstufe 13 wird über eine Rohrleitung 44 auf den Laugenkondensator 45 gegeben und dort kondensiert. Die das Kondensat mitführende Kühllösung läuft über eine Ablaufleitung 46, eine pumpe 47 und einen Rückkühler 48 sowie die Rücklaufleitung 49 wieder zum Mischkühler 45 zurück.

In gleicher Weise wird der in der fünften und letzten Kühlstufe 14 entstehende Brüden über eine Abzugsleitung 50 in einen Mischkondensator 51 überführt und dort mit einer Kühllösung, hier Natronlauge, kondensiert, die mit dem Kondensat über eine Ablaufleitung 52, eine Pumpe 53, einen Rückkühler 54 und eine Rücklaufleitung 55 wieder zum fünften Mischkondensator 51 rückgeführt und umgewälzt wird.

Das in dem vorstehend beschriebenen letzten Mischkondensatorkreislauf durch die Kondensation des Brüden aus der fünften Kristallisatorstufe 14 entstehende Überlaufvolumen wird über eine Überlaufleitung 56 aus dem fünften Mischkondensatorkreislauf, hier direkt aus dem fünften Mischkondensator 51, in den nächstwärmeren vierten Mischkondensatorkreislauf, hier also direkt in den vierten Mischkondensator 45, überführt. Der in diesem Mischkondensatorkreislauf primär durch die Brüdenkondensation entstehende Laugenüberlauf wird über eine Überlaufleitung 57 in den dritten Mischkondensatorkreislauf, hier den dritten Mischkondensator 39, überführt. Der hier entstehende Überlauf wird über eine Überlaufleitung 58 in den zweiten Mischkondensator 31 und der in diesem entstehende Überlauf in eine Ablaufleitung 59 geführt. Die in den MK 51, 45, 39 und 31 kondensierte Brüdenmenge mit einer relativ geringen Natriumhydroxidkonzentration wird abgezogen und der weiteren Verwendung zugeführt.

Bei dieser Verfahrensführung kann im ersten Mischkondensatorkreislauf 25, 26, 27, 28, 29 der Mischkondensationsvorstufe je nach den gegebenen Kühlwasserverhältnissen vorteilhafterweise eine Konzentration der wässrigen Natronlauge von bis zu 30 Gew.-% NaOH eingehalten werden. Dies ermöglicht unter Ausnutzung der gegebenen Siedepunktserhöhung die Mischkondensation einer beachtlichen Menge Wasserdampf, und zwar unter bloßer Verwendung von Kühlwasser, also ohne die Rückkühlung der wässrigen Natronlauge unter Verwendung einer speziellen Kühlflüssigkeit durchführen zu müssen.

Bei einer 30 %igen wässrigen Natronlauge kann noch mit einer Siedepunktserhöhung von ca. 16° C gerechnet werden, so daß bei einer Rückkühlung der im Kreislauf gehaltenen Natronlauge auf beispielsweise 20° C, wozu eine mittlere Kühlwassertemperatur von 12° C erforderlich ist, im Kondensator 25 noch aus der ersten Vakuumkristallisatorstufe 10 abgezogener Dampf mit einer Temperatur von 4° C problemlos kondensiert werden kann.

Berücksichtigt man, daß beispielsweise 100 kg 50 %ige wässrige Natronlauge bei einer Verdünnung bis auf eine Konzentration von 30 Gew.-% NaOH 66 kg Wasser aufnehmen, daß die vom letzten Mischkondensator 51 der mehrstufigen Mischkondensatorkette ablaufende wässrige Natronlauge eine Konzentration von 10 Gew.-% NaOH aufweist und daß ferner zur Verdünnung einer 50 %igen wässrigen Natronlauge bis auf eine Konzentration von 10 Gew.-% NaOH 400 kg Wasser erforderlich sind, so bedeutet dies unter Bezug auf die Vorstufe des vorliegenden Verfahrens, daß 16,5 Gew.-% des insgesamt zu kondensierenden Wasserdampfes ohne das Erfordernis einer besonderen Kühlflüssigkeit für die Rückkühlung verwenden zu müssen unter bloßer Ausnutzung der Siedepunkterhöhung der konzentrierten Natronlauge mischkondensiert werden können. In der Praxis bedeutet dies, daß auch der Energieverbrauch für die Rückkühlung um mindestens 16,5 % erniedrigt werden kann. Zudem können die erforderlichen Kälteaggregate für die Kühlflüssigkeit erheblich preiswerter ausgelegt werden.

Die aus dem Mischkondensator 25 ablaufende rund 30 %ige wässrige Natronlauge wird über die Rohrleitung 60 einer Pumpe 83 zugeführt und von dort über eine Rohrleitung 84 auf die Zulaufleitungen 73, 74, 75 und 76 der Mischkondensatoren der anschließenden mehrstufigen Mischkondensationsanlage aufgeteilt. Alternativ kann aber auch, beispielsweise durch Sperren der Leitungen 74, 75 und 76 die Gesamtmenge der aus der Vorstufe abgezogenen Natronlauge über die Zulaufleitung 73 dem letzten Mischkondensator 51 der mehrstufigen Mischkondensatorenkette zugeführt werden.

Die einzelnen Kondensatoren werden vorzugsweise durch einzeln zugeordnete Dampfstrahlapparate 61, 62, 63, 64, 65, 66 und 67 entlüftet, die in einen Hilfskondensator 68 fördern, in dem der Treibdampf durch Kühlwasser kondensiert wird, das über eine Zulaufleitung 71 zugeführt und über eine Ablaufleitung 72 den Kondensator 68 wieder verläßt. Die Belüftung des Kondensators 68 kann über eine Belüftungsleitung 69 und eine Luftpumpe 70 erfolgen.

Zur Entlastung der Luftpumpe kann auch anstelle des Hilfskondensators 68 ein Oberflächenkondensator Verwendung finden, der beispielsweise mit Kühlsole beaufschlagt wird.

In den einzelnen Mischkondensatorkreislaufschaltungen erfolgt die Rückkühlung der im Kreislauf geführten Kühllösung bzw. Kühllauge in den Rückkühlern 36, 42, 48 bzw. 54 unter Verwendung von Kühlsole, die über eine Zulaufleitung 78 dem Rückkühler 54 zugeführt und über eine Ablaufleitung 79 den Rückkühler 36 wieder verläßt. Unter den hier gewählten Betriebsparametern hat die Kühlsole im Zulauf 78 minus 3° C und verläßt den Rückkühler 36 mit einer Temperatur von 0° C in der Ablaufleitung 79.

Die Rückkühlung der Natronlauge zwischen dem Mischkondensator 25 und dem Rückkühler 28 erfolgt durch Kühlwasser, das bei 81 in den Rückkühler 28 eintritt und diesen bei 82 wieder verläßt.

Alternativ werden nach einer Ausgestaltung der Erfindung die Rückkühler 36, 42, 48 und 54 vorzugsweise als Verdampfer, insbesondere Ammoniakverdampfer ausgebildet. Dabei werden die Verdampfer über die Zulaufleitung 78 mit homogenem flüssigen Ammoniak beaufschlagt, der über die Abzugsleitung 79 als Ammoniakdampf in die Kältemaschine rückgeführt wird. Dadurch erübrigt sich die für die Rückkühlung der Kühlsole erforderliche Aufstellung von Rückkühlern. Außerdem können bei gleichen Leistungskenndaten die Verdampfungsflächen wesentlich kleiner ausgebildet werden, da bei den einzelnen Ammoniakverdampfern, wenn diese mit gleicher Ammoniakverdampfungstemperatur betrieben werden, die im Kreislauf über die Kondensatoren 31, 39, 45 und 51 umgewälzte Kühlflüssigkeit von Stufe zu Stufe zunehmend höhere Temperaturen hat. Dabei kann bei Anlagen mit größerer Kälteleistung auch mit zwei Kältemaschinen gearbeitet werden, wobei die Ammoniakverdampfer dann mit unterschiedlichen Temperaturen betrieben werden können, wodurch eine weitere Energieeinsparung erzielbar ist.

Statt der in der Figur gezeigten Reihenschaltung der Rückkühler 36, 42, 48 und 54 können diese Rückkühler auch parallel oder blockweise geschaltet werden, so daß dann entweder jeder Rückkühler getrennt oder jeder Rückkühlerblock getrennt mit Kühlmedium beaufschlagt werden kann.

Zur Aufrechterhaltung der nach Maßgabe der erforderlichen Siedepunkterhöhung erforderlichen Solvendumkonzentration in den einzelnen Mischkondensatorkreisläufen, hier also zur Aufrechterhaltung der Natronlaugekonzentration in den Laugenkondensatoren, kann jedem der einzelnen separaten Laugenkreisläufe eine im Mischkondensator 25 niedriger konzentrierte Natronlauge über Zulaufleitungen 73, 74, 75, 76 und 77 zudosiert werden. Diese Zudosierung kann kontinuierlich oder diskontinuierlich erfolgen. Außerdem kann zusätzlich oder alternativ die Natronlaugekonzentration in den einzelnen Mischkondensatorkreisläufen durch eine Steuerung des Überlaufs geregelt werden.

Wird die über die Zulaufleitung 1 der in der Figur gezeigten Anlage zugeführte Spinnbadlösung, wie in dem hier erläuterten Beispiel angenommen, insgesamt auf 0° C abgekühlt, so muß im Laugenkondensator 51 mit einer 16 %igen Natronlauge gearbeitet werden. Diese Konzentration kann in den darauffolgenden Mischkondensatoren 45, 39, 31 zunehmend geringer werden, und zwar in dem Maße, daß die in der Kette ständig überlaufende Natronlauge schließlich in der Ablaufleitung 59 am Mischkondensator 31 durch den kondensierten Wasserdampf nur noch eine Konzentration von 10 Gew.-% hat. Diese 10 %ige Natronlauge eignet sich ideal zur Abluftreinigung, insbesondere zur Reinigung der in Viskosespinnereien entstehenden Abluft.

## Patentansprüche

1. Verfahren zur mehrstufigen Mischkondensation von Dämpfen mit Kühllösungen, insbesondere wässriger Natronlauge, wobei jeder Kondensationsstufe ein separater Mischkondensator (25, 31, 39, 45, 51) zugeordnet ist, und die Kühllösung in jeder Kondensationsstufe über den jeweils zugeordneten Mischkondensator (25, 31, 39, 45, 51) in einem eigenen Kreislauf geführt wird, der Überlauf (56, 57, 58) aus jedem Mischkondensatorkreislauf in den nächstwärmeren Mischkondensatorkreislauf überführt und die überlaufende verdünnte Kühllösung (59) erst aus dem wärmsten Mischkondensatorkreislauf ausgetragen wird, und wobei die Konzentration der Kühllösung in jedem Mischkondensatorkreislauf unter Führung durch die benötigte Siedepunktserhöhung durch Zudosieren von konzentrierter Lösung und/oder Überlaufsteuerung geregelt wird, dadurch gekennzeichnet, daß zumindest ein Teil der zu kondensierenden Dämpfe zunächst in mindestens einer Vorstufe in einem Mischkondensator (25) mit frisch über eine Rohrleitung (77) zugeführter hochkonzentrierter Kühllösung kondensiert wird.

2. Verfahren nach Anspruch 1, dadurch gekennzeichnet, daß die Kühllösung in der Vorstufe im Kreislauf geführt und die Kondensationswärme mit Kühlwasser abgeführt wird.

3. Verfahren nach einem der Ansprüche 1 oder 2, dadurch gekennzeichnet, daß mit zwei hintereinandergeschalteten Vorstufen gearbeitet wird.

4. Verfahren nach einem der Ansprüche 1 bis 3, dadurch gekennzeichnet, daß die aus der oder den Vorstufen (25) ablaufende (84), gegenüber der hochkonzentrierten Frischkühllösung verdünnte Kühllösung auf die nachgeschalteten Mischkondensatoren (51, 45, 39, 31) der mehrstufigen Mischkondensation aufgeteilt wird.

5. Verfahren nach einem der Ansprüche 1 bis 3, dadurch gekennzeichnet, daß die Gesamtmenge der aus der oder den Vorstufen (25) ablaufenden (84), gegenüber der hochkonzentrierten Frischkühllösung verdünnten Kühllösung dem Mischkondensator (51) der kältesten Stufe der nachgeschalteten mehrstufigen Mischkondensation zugeführt wird.

6. Verfahren nach einem der Ansprüche 1 bis 5, dadurch gekennzeichnet, daß bei Verwendung von wässriger Natronlauge als Kühllösung, insbesondere beim Regenerieren von Spinnbadlösungen aus Viskosespinnanlagen mit Vakuumkristallisatoren, in der Vorstufe mit einer Laugenkonzentration von 27-40 Gew.-% gearbeitet wird.

7. Verwendung des Verfahrens nach einem der Ansprüche 1 bis 6, insbesondere in Verbindung mit wässriger Natronlage als Kühllösung, beim Regenerieren von Spinnbadlösungen aus Viskosespinnanlagen mit mehreren in Reihe geschalteten Vakuumkristallisatoren.

## Claims

1. A method for the multiple-stage co-condensing of vapors by coolants, especially by an aqueous sodium hydroxide solution, in which each condensation stage comprises a separate co-condenser (25, 31, 39, 45, 51) and the coolant is cycled in each condensation stage in a circulation system of its own through the respective co-condenser (25, 31, 39, 45, 51), the overflow (56, 57, 58) of each co-condenser circulation system is fed into the co-condenser circulation system operated at the next higher temperature, and the overflowing diluted coolant (59) is discharged just from the co-condenser circulation system operated at the highest temperature, and wherein the concentration of the coolant in each co-condenser circulation system is controlled by metered addition of the concentrated solution and/or by regulation of the overflow according to the required boiling point elevation, characterized in that at least a portion of the vapors to be condensed in the first instance is condensed in at least one prestage in a co-condenser (25) by a high-grade coolant fed-in freshly via a pipe (77).

2. A method according to claim 1, characterized in that the coolant is cycled in the prestage, and the condensation energy is dissipated by cooling water.

3. A method according to claim 1 or 2, characterized in that there are two prestages operated in series.

4. A method according to claim 1, 2 or 3, characterized in that the coolant, being diluted in comparison with the high-grade coolant fed-in freshly and being discharged from the prestage (s) (25) via pipe (84), is distributed over the downstream co-condensers (51, 45, 39, 31) of the multiple-stage co-condensing.

5. A method according to claim 1, 2 or 3, characterized in that the total amount of the coolant, being diluted compared with the high-grade coolant fed-in freshly and being discharged from the prestage (s) (25) via pipe (84) is conveyed to the coldest stage of the downstream multiple-stage co-condensing.

6. A method according to claims 1 to 5, characterized in that for the usage of an aqueous sodium hydroxide solution as coolant, especially for the recuperation of spinbath solutions of viscose spinning plants by vacuum crystallizers, the prestage is operated with an alkali concentration of between 27 % and 40 % by mass.

7. The application of the method according to one of the claims 1 to 6, especially in connection with the use of an aqueous sodiun hydroxide solution as coolant, for the recuperation of spinbath solutions of viscose spinning plants by several vacuum crystallizers operated in series.

## Revendications

1. Procédé de co-condensation à plusieurs étages de vapeurs avec des solutions réfrigérantes, notamment une solution aqueuse de lessive de soude, chaque étage de condensation comportant un condenseur mixte séparé, la solution réfrigérante étant, à chaque étage, par l'intermédiaire du condenseur mixte correspondant, mise en circulation dans un circuit propre, le trop-plein provenant de chacun des circuits de condenseurs mixtes étant envoyé dans le circuit de condenseur mixte plus chaud de l'étage le plus proche, la solution réfrigérante diluée sortant du trop-plein n'étant extraite que du circuit de condenseur mixte de l'étage le plus chaud et la concentration de la solution réfrigérante dans chacun des circuits de condenseurs mixtes étant réglée, en faisant intervenir l'élévation nécessaire du point d'ébullition, par addition de solution concentrée et/ou par commande du trop-plein, caractérisé en ce qu'une partie au moins des vapeurs à condenser se condense d'abord dans au moins un étage préparatoire dans un condenseur mixte (25) avec un apport frais de solution réfrigérante fortement concentrée.

2. Procédé selon la revendication 1, caractérisé en ce que la solution réfrigérante est mise en circulation dans l'étage préparatoire et en ce que la chaleur de condensation est évacuée avec l'eau de réfrigération.

3. Procédé selon l'une des revendications 1 ou 2, caractérisé en ce qu'il comporte l'utilisation de deux étages préparatoires successifs.

4. Procédé selon l'une des revendications 1 à 3, caractérisé en ce que la solution réfrigérante (84) qui provient du ou des étages préparatoires (25) et qui est plus diluée que la solution réfrigérante de forte concentration fraîchement introduite est répartie entre les condenseurs mixtes suivants (51, 45, 39, 31) de la co-condensation à plusieurs étages.

5. Procédé selon l'une des revendications 1 à 3, caractérisé en ce que la totalité de la solution réfrigérante (84) qui provient du ou des étages préparatoires (25) et qui est plus diluée que la solution réfrigérante de forte concentration fraîchement introduite est envoyée au condenseur mixte (51) de l'étage le plus froid de la co-condensation à plusieurs étages située en aval.

6. Procédé selon l'une des revendications 1 à 5, caractérisé en ce que, lorsque c'est une solution aqueuse de lessive de soude qui est utilisée comme solution réfrigérante, notamment pour la régénération de solutions de bains de filature dans les installations de traitement de la viscose comportant des cristallisoirs sous vide, la concentration de la lessive dans l'étage préparatoire est de 27 à 40 % en poids.

7. Utilisation du procédé selon l'une des revendications 1 à 6, notamment avec une solution réfrigérante constituée par une solution aqueuse de lessive de soude, pour la régénération de solutions de bains de filature dans les installations de traitement de la viscose comportant plusieurs cristallisoirs sous vide montés en série.